# EUROPEAN PATENT APPLICATION

(11) **EP 2 413 230 A2**
(43) Date of publication of application: **01.02.2012**
(21) Application number: 11173800.1
(22) Date of filing: 13.07.2011
(51) Int. Cl.: G06F 3/048, H04N 5/44

(54) **Method for providing user interface and display apparatus applying the same**

(30) Priority: 30.07.2010 KR 20100074057
(71) Applicant: SAMSUNG ELECTRONICS CO., LTD., Suwon-si Gyeonggi-do 442-742 (KR)
(72) Inventor: Lee, Hyeon-ji, Seoul (KR); Kwon, Yong-hwan, Gyeonggi-do (KR); Ahn, Jun-mo, Seoul (KR); Bae, Hee-jeong, Gyeonggi-do (KR)
(74) Representative: Davies, Robert Ean

(57) **Abstract**

A method for providing a user interface and a display apparatus applying the same are provided. According to the method for providing the user interface, if a flick touch manipulation of a first axis direction is sensed, a category of a displayed content list is changed, so that a user can change the category of the content list.

## Description

### CROSS-REFERENCE TO RELATED APPLICATION

This application claims priority from Korean Patent Application No. 10-2010-0074057, filed on July 30, 2010, in the Korean Intellectual Property Office, the disclosure of which is incorporated herein by reference in its entirety.

### BACKGROUND

### 1. Field

Methods and apparatuses consistent with exemplary embodiments relate to a method for providing a user interface and a display apparatus applying the same, and more particularly, to a method for providing a user interface to allow a user to find a desired content using a touch manipulation, and a display apparatus applying the same.

### 2. Description of the Related Art

Recently, the technology for providing many contents using a variety of display apparatuses has developed. As the technology for the storage medium for storing contents develops, it is possible to store many contents in a single device. Also, the contents can be provided from not only the storage space of a device but also an external source through the Internet or other communication networks.

Accordingly, the number of contents that can be used through a single display apparatus rapidly increases and thus it is difficult for a user to find a desired content from the numerous contents.

Also, the display apparatus is able to replay many types of contents received through diverse paths. However, as the number of paths for receiving contents increase and the types of contents becomes diversified, users have to go through a complicated process in order to select a desired content.

Users need a device that can search for the content he or she wishes to find among the numerous contents with ease. Therefore, there is a need for a method to easily search for a content a user wishes to find.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiment provide a method for providing a user interface, which changes a category of a displayed content list if a flick touch manipulation of a first axis direction is sensed, and a display apparatus applying the same.

According to an aspect of an exemplary embodiment, there is provided a method for providing a user interface to manipulate a content list, which is a list relating to a plurality of contents displayed on a display apparatus, the method including: sensing a user's touch manipulation when a content list relating to a plurality of contents is displayed, if a flick touch manipulation of a first axis direction is sensed, changing a category of the displayed content list, and if a flick touch manipulation of a second axis direction is sensed, updating the content list which is displayed on one page within a current category and displaying the updated content list.

The changing the category may include, if the flick touch manipulation of the first axis direction is sensed in a state that a type of content of the content list is selected and a content list relating to the selected type of content is displayed, changing a storage medium-based category of the displayed content list.

The changing the category may include, if the flick touch manipulation of the first axis direction is sensed in a state that a storage medium of the content list is selected and a content list relating to the selected storage medium is displayed, changing a content type-based category of the displayed content list.

The changing the category may include, if the flick touch manipulation of the first axis direction is sensed, changing a storage medium to which a displayed content list belongs and displaying a content list relating to contents stored in the changed storage medium.

The storage medium may include at least one of a storage medium embedded in the display apparatus, an external storage medium connected to the display apparatus, and a storage medium embedded in an external apparatus connected to the display apparatus, but is not limited thereto.

The changing the category may include, if the flick touch manipulation of the first axis direction is sensed, changing a channel type to which a displayed content list belongs and displaying a content list relating to contents received through the changed channel type.

The channel type may include at least one of a terrestrial TV channel, a cable TV channel, a radio channel, a data broadcast channel, and an Internet Protocol television (IPTV) channel, but is not limited thereto.

The changing the category may include, if the flick touch manipulation of the first axis direction is sensed, changing a type of content to which a displayed content list belongs and displaying a content list relating to contents of the changed type.

The type of content may include at least one of moving picture contents, photo contents, music contents, and document contents, but is not limited thereto.

The sensing the touch manipulation may include: sensing the user's touch manipulation by a remote controller operating with respect to the display apparatus, and transmitting information regarding the sensed touch manipulation to the display apparatus by the remote controller.

According to an aspect of another exemplary embodiment, there is provided a display apparatus including: a display unit which displays a content list relating to a plurality of contents, and a controller which, if a flick touch manipulation of a first axis direction is sensed, changing a category of the displayed content list, and, if a flick touch manipulation of a second axis-direction, updates the content list which is displayed on one page within a current category.

If the flick touch manipulation of the first axis direction is sensed in a state that a type of content of the content list is selected and a content list relating to the selected type of content is displayed, the controller may change a storage medium-based category of the displayed content list.

If the flick touch manipulation of the first axis direction is sensed in a state that a storage medium of the content list is selected and a content list relating to the selected storage medium is displayed, the controller may change a content type-based category of the displayed content list.

If the flick touch manipulation of the first axis direction is sensed, the controller may change a storage medium to which a displayed content list belongs and display a content list relating to contents stored in the changed storage medium.

The storage medium may include at least one of a storage medium embedded in the display apparatus, an external storage medium connected to the display apparatus, and a storage medium embedded in an external apparatus connected to the display apparatus, but is not limited thereto.

If the flick touch manipulation of the first axis direction is sensed, the controller may change a channel type to which a displayed content list belongs and control to display a content list relating to contents received through the changed channel type.

The channel type may include at least one of a terrestrial TV channel, a cable TV channel, a radio channel, a data broadcast channel, and an IPTV channel, but is not limited thereto.

If the flick touch manipulation of the first axis direction is sensed, the controller may change a type of content to which a displayed content list belongs and control to display a content list relating to contents of the changed type.

The type of content may include at least one of moving picture contents, photo contents, music contents, and document contents.

The display apparatus may further include a remote control receiver which receives information regarding a touch manipulation sensed by a remote controller operating with respect to the display apparatus.

According to the method for providing the user interface and the display apparatus according to the various exemplary embodiments described above, if the flick touch manipulation of the first axis direction is sensed, the category of the displayed content list is changed, so that the user can easily change the category of the content list.

In particular, the storage medium, the channel type, or the content type of the content list is changed simply by the upward or downward flick touch manipulation, so that the user can easily find a desired content.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a schematic view illustrating an environment in which a television (TV) and a remote controller are used according to an exemplary embodiment;
FIG. 2 is a block diagram illustrating a TV in detail according to an exemplary embodiment;
FIG. 3 is a flowchart illustrating a method for providing a user interface according to an exemplary embodiment;
FIG. 4 is a view illustrating types of touch manipulation according to an exemplary embodiment;
FIG. 5 is a flowchart illustrating a process of changing a storage medium by a flick touch manipulation according to an exemplary embodiment;
FIGS. 6A to 6E are views of a process of changing a storage medium by a flick touch manipulation according to an exemplary embodiment;
FIG. 7 is a flowchart illustrating a process of changing a channel type by a flick touch manipulation according to an exemplary embodiment;
FIGS. 8A to 8D are views illustrating a process of changing a channel type by a flick touch manipulation according to an exemplary embodiment;
FIG. 9 is a flowchart illustrating a process of changing a type of content by a flick touch manipulation according to an exemplary embodiment;
FIGS. 10A to 10C are views illustrating a process of changing a type of content by a flick touch manipulation according to an exemplary embodiment; and
FIGS. 11A and 11B are views illustrating an operation of directly inputting a touch manipulation into a screen of a TV according to an exemplary embodiment.

### DETAILED DESCRIPTION OF THE EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

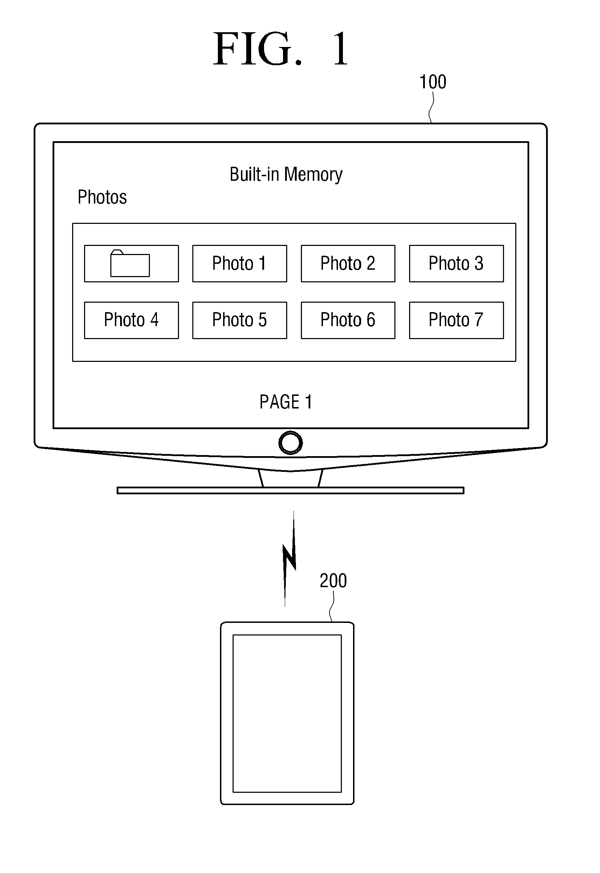

FIG. 1 is a schematic view illustrating an environment in which a TV 100 and a remote controller 200 are used according to an exemplary embodiment. As shown in FIG. 1, the TV 100 is controlled by the remote controller 200.

The remote controller 200 is provided with a touch screen or a touch pad for recognizing a user's touch manipulation. Accordingly, the remote controller 200 senses a user's touch manipulation and transmits touch manipulation information input by a user to the TV 100.

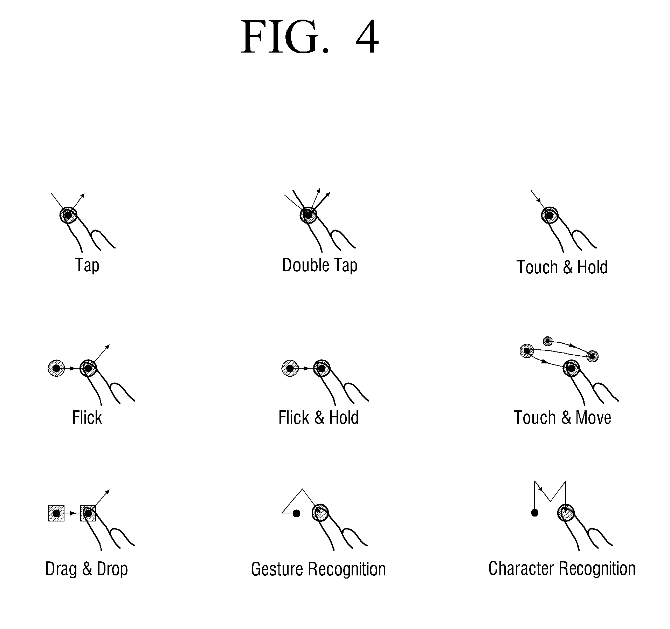

Under such an environment, if a flick touch manipulation is input through the remote controller 200, the TV 100 changes a category of a content list displayed on a screen. The flick touch manipulation is an action of touching a surface of the touch screen or the touch pad with a user's finger, sliding the finger over the surface in one direction, and lifting the finger away from the touch screen or the touch pad. In other words, the flick touch manipulation is a manipulation of slightly pushing a touch sensing surface in a predetermined direction (in other words, a kind of action of turning the pages of a book with one finger). The types of touch manipulation will be explained in detail with reference to FIG. 4.

The content list is a graphic user interface (GUI) that is displayed on the screen, for allowing a user to search a plurality of contents. The user is able to select a desired content using the content list displayed on the screen.

If it is not possible to display all of the contents on one screen, the content list may be provided on a plurality of pages. The pages of the content list are turned by a horizontal flick touch manipulation (in other words, leftward or rightward flick touch manipulation).

Also, the content list may be classified by various categories. The category is a classification which divides contents of a current content list into diverse types. Therefore, the TV 100 determines contents of a content list according to what a category is. Specifically, the category includes a storage medium-based category, a channel type-based category, and a content type-based category.

The storage medium-based category classifies the contents of a content list according to a storage medium in which the contents are stored. The storage medium may be at least one of a storage medium embedded in the TV 100, an external storage medium connected to the TV 100, and a storage medium embedded in an external apparatus connected to the TV 100. The storage medium embedded in the TV 100 may be a built-in memory or a built-in hard disk. Also, the external storage medium connected to the TV 100 may be a flash memory, a universal serial bus (USB) memory, a memory card, an external hard disk, a compact disk (CD), a digital versatile disk (DVD), or a Blu-ray disk (BD). Also, the external apparatus connected to the TV 100 may be a personal computer, a DVD player, and a BD player.

As described above, if the content list is classified by the storage medium-based category, the TV 100 changes a storage medium to which a currently displayed content list belongs, when a flick touch manipulation is sensed. Accordingly, the user is able to select a storage medium to identify contents included therein using the flick touch manipulation.

The channel type-based category classifies the contents according to a channel type through which the contents are received. The channel type may be at least one of a terrestrial TV channel, a cable TV channel, a radio channel, a data broadcast channel, and an IPTV channel. If the content list is classified by the channel type-based category, each item of the content list indicates a channel.

As described above, if the content list is classified by the channel type-based category, the TV 100 changes a type of channel to which a currently displayed content list belongs when a flick touch manipulation is sensed. Accordingly, the user is able to select a type of channel to identify contents thereof using the flick touch manipulation.

The content type-based category classifies the contents according to a type of content of the content list. The type of content may be at least one of movie content, photo content, and music content.

As described above, if the content list is classified by the content type-based category, the TV 100 changes a type of content to which a currently displayed content list belongs when a flick touch manipulation is sensed. Accordingly, the user is able to select a type of content to identify contents thereof using the flick touch manipulation.

As described above, the category is a condition based on which the contents of the content list are determined. Accordingly, if the category of the content list is changed, the contents of the content list are also changed. On the other hand, if the page of the content list is changed, the contents of the content list remain as they are and the contents on the next page are displayed.

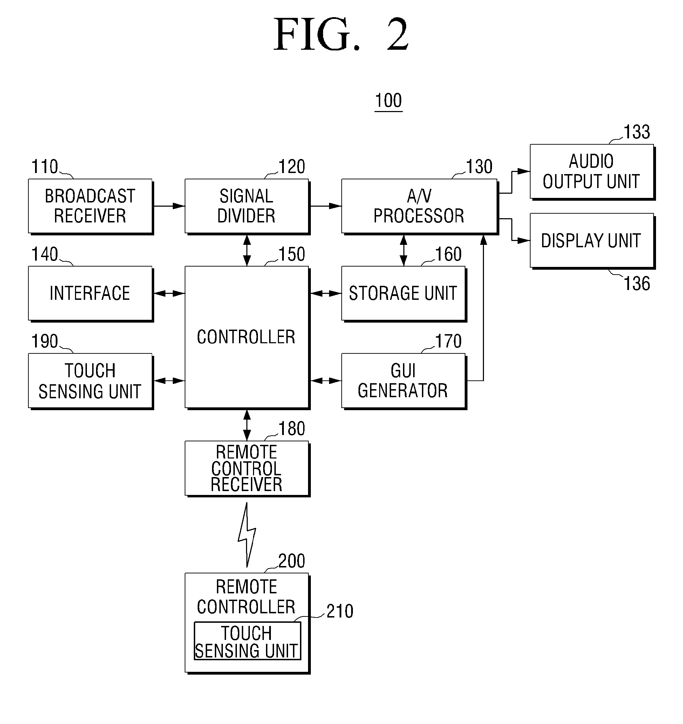

Hereinafter, the TV 100 and the remote controller 200 will be described in detail with reference to FIG. 2. FIG. 2 is a block diagram illustrating the TV 100 in detail according to an exemplary embodiment.

As shown in FIG. 2, the TV 100 includes a broadcast receiver 110, a signal divider 120, an audio/video (A/V) processor 130, an audio output unit 133, a display unit 136, an interface 140, a controller 150, a storage unit 160, a graphic user interface (GUI) generator 170, a remote control receiver 180, and a touch sensing unit 190.

The broadcast receiver 110 receives a broadcast from a broadcasting station or a satellite by wire or wirelessly and tunes to the broadcast. Also, the broadcast receiver 110 includes a plurality of tuners which receive broadcast signals through a plurality of channels simultaneously.

The signal divider 120 divides the broadcast signal into a video signal, an audio signal, and electronic program guide (EPG) information. Also, signal divider 120 transmits the video signal and the audio signal to the A/V processor 130, and transmits the EPG information to the GUI generator 170.

The A/V processor 130 performs signal-processing such as video decoding, video scaling, and audio decoding with respect to the video signal and the audio signal input from the signal divider 120 and the interface 140. Also, the A/V processor 130 outputs the video signal to the display unit 136 and outputs the audio signal to the audio output unit 133.

On the other hand, the video signal and the audio signal may be stored in the storage unit 160 or may be transmitted to an external apparatus through the interface 140. In this case, the A/V processor 130 outputs the video signal and the audio signal to the storage unit 160 or the interface 140 in compressed formats.

The audio output unit 133 outputs a sound output from the A/V processor 130 through a speaker or outputs the sound to an external apparatus such as an external speaker connected through an external output port.

The display unit 136 displays an image output from the A/V processor 130 on a display or outputs the image to an external apparatus such as an external display connected through an external output port. Also, the display unit 136 may display menus generated by the GUI generator 170 on the screen. For example, the display unit 136 may display a content list screen on which a list relating to a plurality of contents is displayed for selection of a content.

The interface 140 connects the TV 100 to a communication network such as the Internet or to another video apparatus. Also, the interface 140 receives contents from the Internet or an external apparatus, and transmits the received contents to the controller 150.

The storage unit 160 stores various contents. For example, the storage unit 160 may store movie contents, photo contents, and music contents.

The storage unit 160 records a broadcast received from the broadcast receiver 110 and stores the recorded broadcast as content. Also, the storage unit 160 may store contents copied by the user in addition to the recorded file. Also, the storage unit 160 may output the stored contents to the A/V processor 130. The storage unit 160 may be realized as a hard disk or a non-volatile memory.

The GUI generator 170 generates a GUI to be displayed on the screen and adds the GUI to the image output from the A/V processor 130. In particular, the GUI generator 170 generates a GUI relating to the content list screen.

The remote control receiver 180 receives user's manipulation information from the remote controller 200. In particular, the remote control receiver 180 receives information regarding a user's touch manipulation from the remote controller 200, and transmits the received touch manipulation information to the controller 150. For example, the remote control receiver 180 receives information regarding flick touch manipulations in various directions from the remote controller 200.

The touch sensing unit 190 senses the user's touch manipulation using a touch sensor. The touch sensing unit 190 may be a touch screen on the screen of the TV 100 or may be a touch pad separately provided on an outer surface of the TV 100. The touch sensing unit 190 senses the user's touch manipulation and transmits the information of the sensed touch manipulation to the controller 150.

The remote controller 200 receives the user's manipulation and transmits the user's manipulation to the TV 100. In particular, the remote controller 200 includes a touch sensing unit 210 and receives the user's touch manipulation through the touch sensing unit 210. Also, the remote controller 200 transmits information regarding the sensed touch manipulation to the remote control receiver 180 of the TV 100.

The touch sensing unit 210 of the remote controller 200 senses the user's touch manipulation using a touch sensor. The touch sensing unit 210 may be a touch screen on the remote controller 200 or may be a touch pad separately provided on an outer surface of the remote controller 200.

As described above, the touch sensing units 190 and 210 may be provided in both the TV 100 and the remote controller 200. However, the touch sensing units 190 and 210 may be provided in one of the TV 100 and the remote controller 200. Also, the touch manipulation is a touch manipulation sensed by the touch sensing unit 190 of the TV 100 or the touch sensing unit 210 of the remote controller 200.

The controller 150 comprehends a user command based on the user's manipulation transmitted from the remote controller 200 or the touch sensing unit 190, and controls an overall operation of the TV 100 according to the user command.

Specifically, the controller 150 controls the display unit 136 to display a content list on the screen according to the user's manipulation. Also, the controller 150 changes the category of the displayed content list, if a vertical flick touch manipulation (in other words, upward or downward flick touch manipulation) is sensed.

Also, the controller 150 changes the page of the displayed content list, if a horizontal flick touch manipulation is sensed. In other words, if the horizontal flick touch manipulation is sensed, the controller 150 updates the content list displayed on one page within a current category. Specifically, if a leftward flick touch manipulation is sensed, the controller 150 displays a content list on a next page within the current category. Also, if a rightward flick touch manipulation is sensed, the controller displays a content list on a previous page within the current category.

The category recited herein may include a storage medium-based category, a channel type-based category, and a content type-based category, but is not limited thereto. Hereinafter, the operation of the controller 150 will be explained according each of the three categories.

In the case of the storage medium-based category, if a vertical flick touch manipulation is sensed, the controller 150 changes a storage medium to which a currently displayed content list belongs. Also, the controller 150 controls the display unit 136 to display a content list relating to contents stored in the changed storage medium.

Specifically, if an upward flick touch manipulation is sensed, the controller 150 changes the storage medium to which the content list belongs to a next storage medium, and controls the display unit 136 to display a content list relating to the next storage medium. Also, if a downward flick touch manipulation is sensed, the controller 150 changes the storage medium to which the content list belongs to a previous storage medium, and displays the display unit 136 to display a content list relating to the previous storage medium.

The upward flick touch manipulation is a flick touch manipulation that is sensed when the user slides his or her finger upwardly on the screen. The downward flick touch manipulation is a flick touch manipulation that is sensed when the user slides his or her finger downwardly on the screen. Also, the leftward flick touch manipulation is a flick touch manipulation that is sensed when the user slides his or her finger from the right to the left. The rightward flick touch manipulation is a flick touch manipulation that is sensed when the user slides his or her finger from the left to the right.

For example, it is assumed that the TV 100 includes a built-in memory and is connected to a USB memory and an external apparatus, and the TV 100 is displaying a content list relating to contents stored in the built-in memory. If an upward flick is input in this state, the TV 100 displays a content list relating to contents stored in the USB memory on the screen. After that, if another upward flick is input, the TV 100 displays a content list relating to contents stored in a memory of the external apparatus on the screen. After that, if a downward flick is input, the TV 100 displays the content list relating to the contents stored in the USB memory again.

As described above, if the vertical flick touch manipulation (upward flick or downward flick) is sensed, the controller 150 changes the storage medium-based category of the content list.

In the case of the channel type-based category, if a vertical flick touch manipulation is sensed, the controller 150 changes a channel type to which a currently displayed content list belongs. Also, the controller 150 controls the display unit 136 to display a content list relating to contents received through the changed channel type.

Specifically, if an upward flick touch manipulation is sensed, the controller 150 changes the channel type to which the content list belongs to a next channel type and controls the display unit 136 to display a content list relating to the next channel type. Also, if a downward flick touch manipulation is sensed, the controller 150 changes the channel type to which the content list belongs to a previous channel type and displays the display unit 136 to display a content list relating to the previous channel type.

For example, it is assumed that the type of channel receivable by the TV 100 includes a terrestrial TV channel, a cable broadcast TV channel, a radio channel, a data broadcast channel, and an IPTV channel, and a content list (channel list) relating to the terrestrial TV channel is currently displayed on the screen. If an upward flick is input in this state, the TV 100 displays a content list (channel list) relating to the cable broadcast TV channels on the screen. After that, if another upward flick is input, the TV 100 displays a content list (channel list) relating to the radio channels on the screen. After that, if a downward flick is input, the TV 100 displays the content list relating to the cable broadcast TV channels again on the screen.

As described above, if the vertical flick touch manipulation (upward flick or downward flick) is sensed, the controller 150 changes the channel type-based category of the content list.

In the case of the content type-based category, if a vertical flick touch manipulation is sensed, the controller 150 changes a type of content to which a currently displayed content list belongs. Also, controller 150 controls the display unit 136 to display a content list relating to the changed type of content.

Specifically, if an upward flick touch manipulation is sensed, the controller 150 changes the type of content to which the content list belongs to a next type, and controls the display unit 136 to display a content list relating to the next type of content. Also, if a downward flick touch manipulation is sensed, the controller 150 changes the type of content to which the content list belongs to a previous type, and controls the display unit 136 to display a content list relating to the previous type of content.

For example, it is assumed that the type of content to be replayed by the TV 100 includes movie contents, photo contents, and music contents, and a content list relating the movie contents is displayed on the screen. If an upward flick is input in this state, the TV 100 displays a content list relating to the photo contents. After that, if another upward flick is input, the TV 100 displays a content list relating to the music contents on the screen. After that, if a downward flick is input, the TV 100 displays the content list relating to the photo contents again on the screen.

As described above, if the vertical flick touch manipulation (upward flick or downward flick) is sensed, the controller 150 changes the content type-based category of the content list.

Also, the controller 150 may control the category, which is changed by the vertical flick touch manipulation, to be changed according to a current setting condition of the content list.

For example, it is assumed that the content list is set to display a list of music contents. In this case, if an upward flick touch manipulation is sensed, the controller 150 changes the storage medium to which the current content list belongs to a next storage medium, and controls the display unit 136 to display a music content list relating to the next storage medium. If a downward flick touch manipulation is sensed, the controller 150 changes the storage medium to which the content list belongs to a previous storage medium, and controls the display unit 136 to display a music content list relating to the previous storage medium.

Also, it is assumed that the content list is set to display a list relating to contents stored in a USB memory. If an upward flick is input in the state that movie contents stored in the USB memory is being displayed, the controller 150 changes the category from the movie category to the photo category and controls the display unit 136 to display a content list relating to the photo contents stored in the USB memory. After that, if another upward flick is input, the controller 150 changes the category from the photo category to the music category, and displays a content list relating to the music contents stored in the USB memory on the screen. After that, if a downward flick is input, the TV 100 displays the content list relating to the photo contents stored in the USB memory again on the screen.

As described above, the controller 150 controls the category, which is changed by the vertical flick manipulation, to be changed according to what category is set as a reference category of the content list.

As described above, if the vertical flick touch manipulation is sensed, the TV 100 changes the category of the content list which is being displayed. Accordingly, the user is able to change the category of the content list simply with the flick touch manipulation.

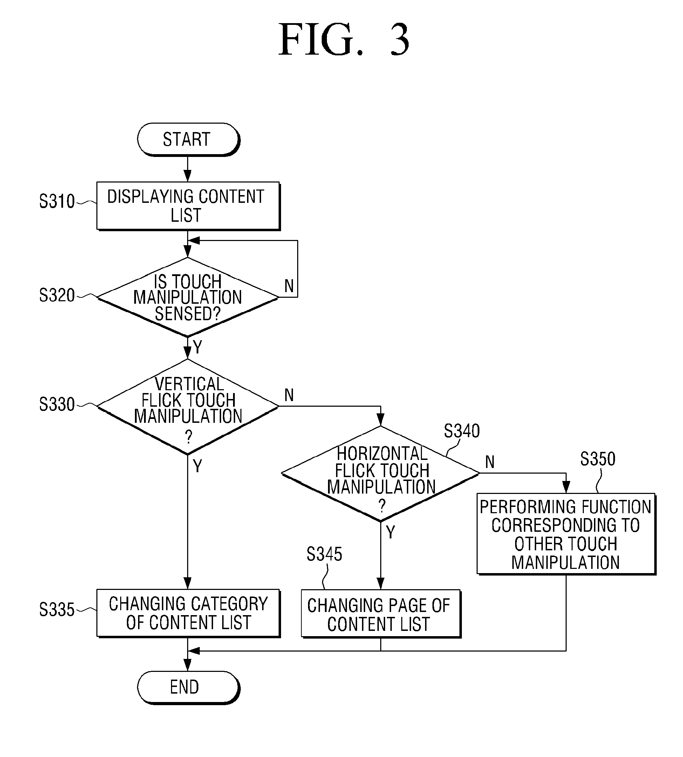

Hereinafter, a method for providing a user interface to change a category of a content list according to an exemplary embodiment will be explained in detail with reference to FIG. 3. FIG. 3 is a flowchart illustrating a method for providing a user interface according to an exemplary embodiment.

The TV 100 displays a content list on the screen according to a user's manipulation (S310). The TV 100 determines whether a touch manipulation is sensed or not (S320).

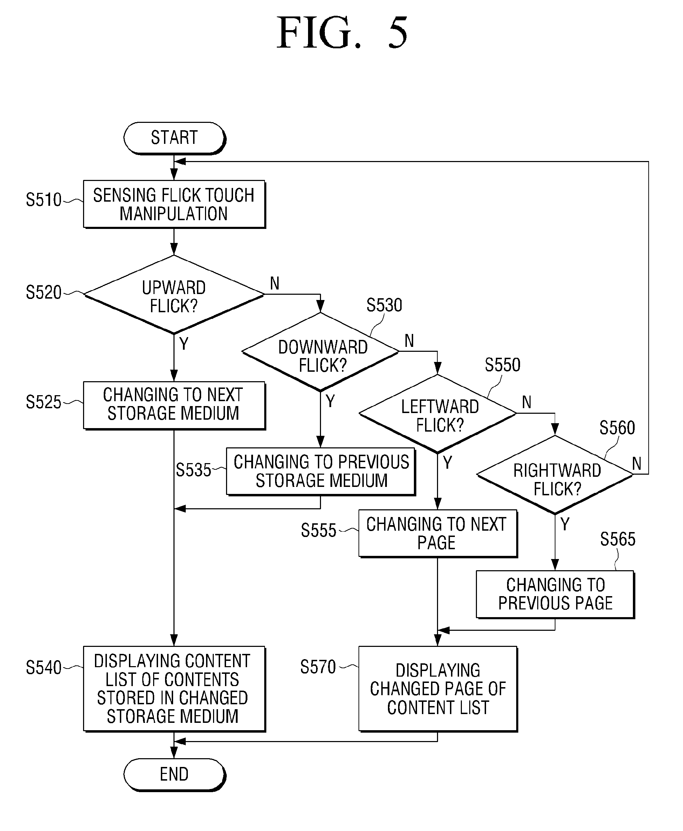

If the touch manipulation is sensed (S320-Y), the TV 100 determines whether the touch manipulation is a vertical flick touch manipulation (upward or downward flick touch manipulation) or not (S330). If the vertical flick touch manipulation is sensed (S330-Y), the TV 100 changes a category of the content list displayed on the screen (S335). The category includes a storage medium-based category, a channel type-based category, and a content type-based category. The operation of the TV 100 according the three categories will be explained with reference to FIGS. 5 to 10C.

Also, the TV 100 may control the category, which is changed by the vertical flick touch manipulation, to be changed according to a current setting condition of the content list. This operation has been described above with reference to FIG. 2.

If a horizontal flick touch manipulation is sensed (S340-Y), the TV 100 changes a page of the displayed content list (S345).

If the sensed touch manipulation is a touch manipulation other than the flick touch manipulation (S340-N), the TV 100 performs a function corresponding to the touch manipulation other than the flick touch manipulation (S350).

According to the above-described process, the TV 100 changes the category of the content list which is being displayed, if the vertical flick is sensed. Therefore, the user is able to change the category of the content list simply with the flick manipulation.

Hereinafter, the types of touch input to the touch screen or touch pad will be explained with reference to FIG. 4. FIG. 4 is a view illustrating the types of touch on the touch screen according to an exemplary embodiment.

As shown in FIG. 4, the types of touch input to the touch screen includes "tap", "double tap", "touch and hold", "flick", "flick and hold", "touch and move", "drag and drop", "gesture recognition", and "character recognition", but are not limited thereto.

The "tap" is an action of touching the touch screen one time for a brief time and releasing the touch. In general, the user touches the touch screen for a time shorter than a predetermined time. The tap plays the same role as a click of a mouse.

The "double tap" is an action of touching the touch screen two times for a brief time and releasing the touch. The double tap plays the same role as a double click of the mouse.

The "touch and hold" is an action of touching a certain point of the touch screen and holding the touch. In other words, the user continues touching the certain point of the touch screen for a time longer than the predetermined time. The "touch and hold" is similar to an action of pressing a button of a mouse.

The "flick" is an action of touching the touch screen, sliding at least one finger on the touch screen in a predetermined direction, and releasing the touch. The flick may be expressed by "stroke."

The "flick and hold" is an action of touching the touch screen, sliding at least one finger on the touch screen in a predetermined direction, and holding the touch at a certain point.

The "touch and move" is an action of touching the touch screen and sliding at least one finger on the touch screen in various directions.

The "drag and drop" is an action of selecting an item displayed on the touch screen by touching it, moving the selected item to another point by flicking, and releasing the touch. The drag and drop is similar to dragging of the mouse

The "gesture recognition" is an input of a pre-stored gesture on the touch screen. For example, if the user draws a triangle on the touch screen, the touch screen informs the controller 150 that the triangle is input.

The "character recognition" is an input of a pre-defined character on the touch screen. For example, if the user writes the English letter "M" on the touch screen, the touch screen informs the controller 150 that the English letter "M" is input.

As described above, diverse types of touch input exist on the touch screen. However, more diverse types of touch input may exist in addition to the above-described touch input.

Also, the "flick" is the action of touching the touch screen or the touch pad, sliding at least one finger on the screen in a predetermined direction, and releasing the touch.

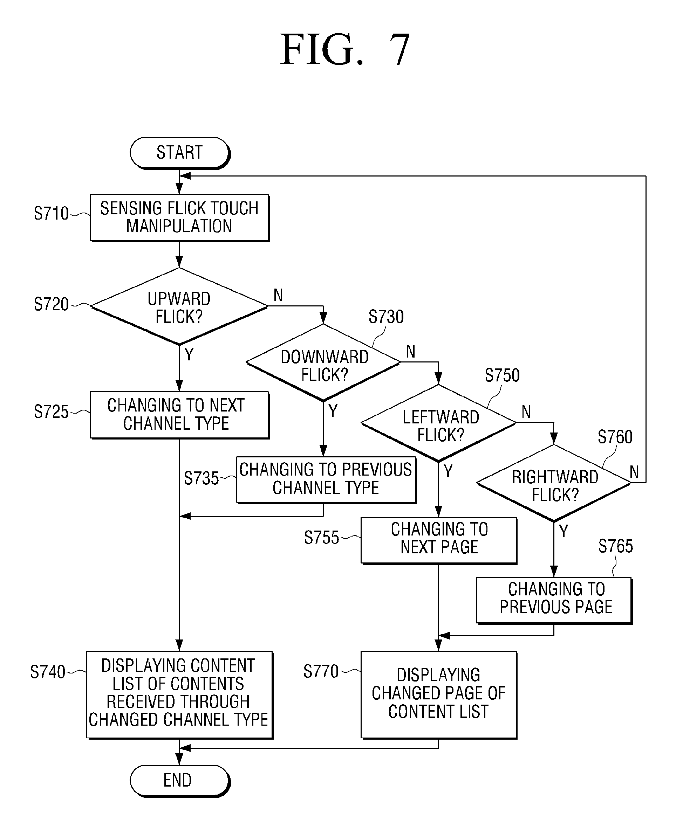

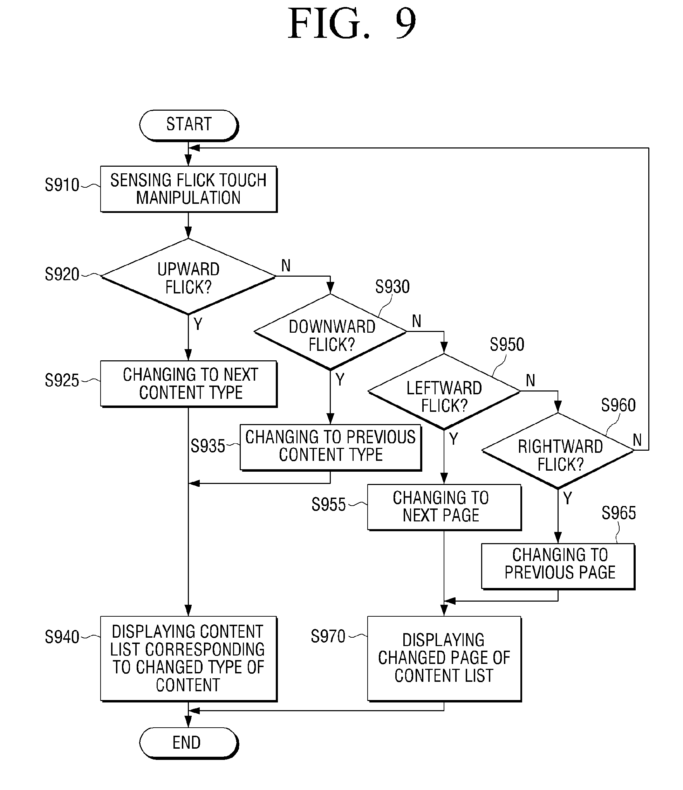

Hereinafter, examples of the above-described three categories will be explained with reference to FIGS. 5 to 10C. FIGS. 5 to 6E are views to explain the storage medium-based category, FIGS. 7 to 8D are views to explain the channel type-based category, and FIGS. 9 to 10D are views to explain the content type-based category.

First, the storage medium-based category will be explained with reference to FIGS. 5 to 6E. FIG. 5 is a flowchart illustrating a process of changing a storage medium by a flick touch manipulation.

The TV 100 senses a flick touch manipulation (S510). If the sensed flick touch manipulation is an upward flick (S520-Y), the TV 100 changes a storage medium to which a currently displayed content list belongs to a next storage medium (S525). Then, the TV 100 displays a content list relating to the next storage medium (S540).

On the other hand, if the sensed flick touch manipulation is a downward flick (S530-Y), the TV 100 changes the storage medium to which the current content list belongs to a previous storage medium (S535). Then, the TV 100 displays a content list relating to the previous storage medium (S540).

If the sensed flick touch manipulation is a leftward flick (S550-Y), the TV 100 changes a page of the current content list to a next page (S555). Then, the TV 100 displays the next page of the content list (S570).

If the sensed flick touch manipulation is a rightward flick (S560-Y), the TV 100 changes the page of the current content list to a previous page (S565). Then, the TV 100 displays the previous page of the content list (S570).

As described above, if the vertical flick touch manipulation (upward flick or downward flick) is sensed, the TV 100 changes the storage medium-based category of the content list accordingly.

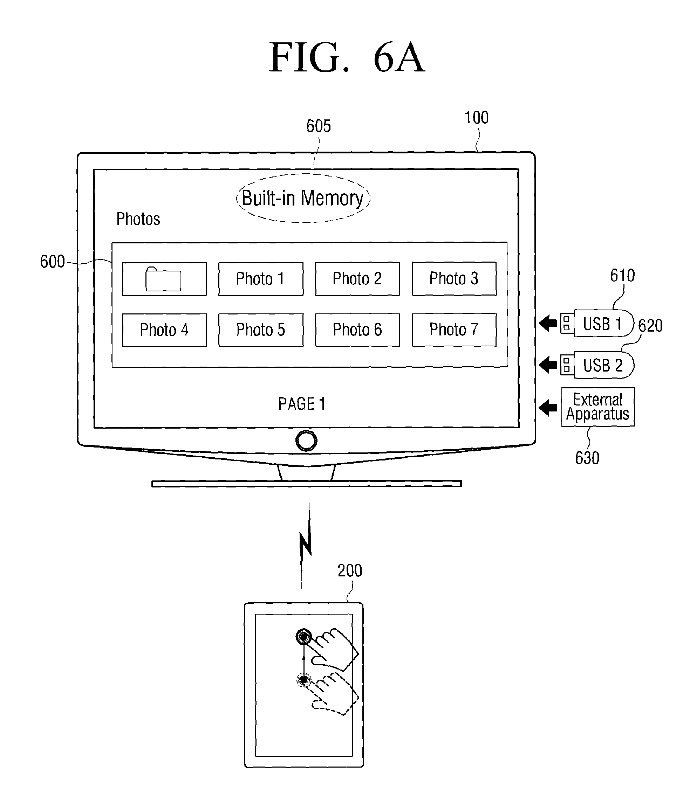

The example of the process of changing the storage medium-based category will be explained in detail with reference to FIGS. 6A to 6E. FIGS. 6A to 6E are views illustrating the process of changing the storage medium by the flick touch manipulation. In FIGS. 6A to 6E, the type of content of the content list is photo contents.

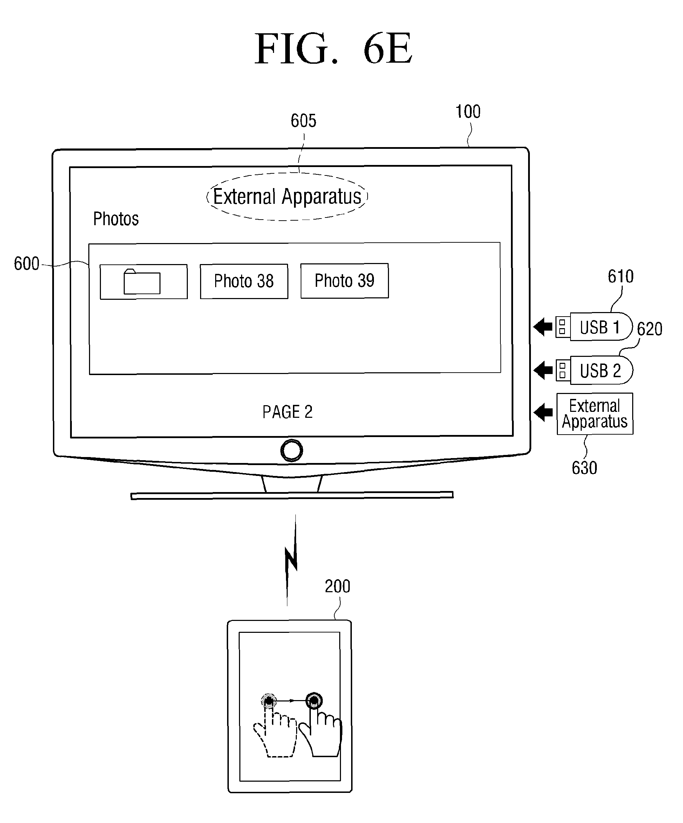

In FIGS. 6A to 6E, the TV 100 includes a built-in memory and a first USB memory 610, a second USB memory 620, and an external apparatus 630 are connected to the TV 100. The storage medium is changed in order of the built-in memory, the first USB memory 610, the second USB memory 620, and the external apparatus 630. Also, a content list display screen includes a content list display area 600 and a storage medium display area 605, as shown in FIGS. 6A and 6E.

FIG. 6A illustrates the TV 100 which displays a content list of contents stored in the built-in memory on the screen. As shown in FIG. 6A, the storage medium display area 605 displays "built-in memory." In other words, the content list displayed on the content list display area 600 is a list relating to photos stored in the built-in memory of the TV 100. Also, referring to a lower portion of the screen, the first page of the content list is currently displayed on the screen.

In this state, if an upward flick touch manipulation is input to the touch screen of the remote controller 200 as shown in FIG. 6A, the TV 100 changes the storage medium to which the current content list belongs from the built-in memory to the first USB memory 610. The first USB memory 610 is the next storage medium of the built-in memory.

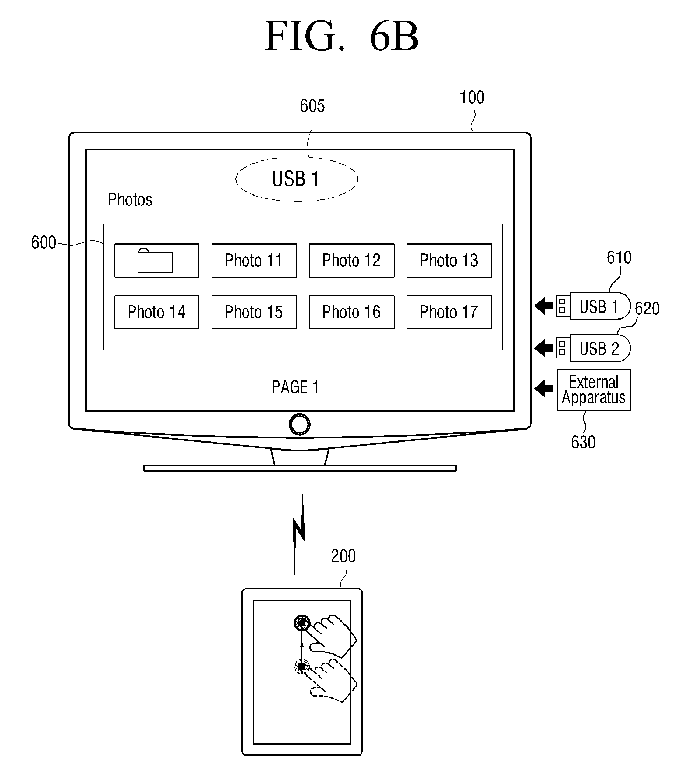

Accordingly, if the upward flick touch manipulation is input to the touch screen of the remote controller 200 as shown in FIG. 6A, a content list relating to the first USB memory 610 is displayed on the content list display area 600 as shown in FIG. 6B. Also, as shown in FIG. 6B, 'USB 1' is displayed on the storage medium display area 605, representing that the storage medium to which the current content list belongs is the first USB memory 610.

In this state, if another upward flick touch manipulation is input to the touch screen of the remote controller 200 as shown in FIG. 6B, the TV 100 changes the storage medium to which the current content list belongs from the first USB memory 610 to the second USB memory 620. The second USB memory 620 is the next storage medium of the first USB memory 610.

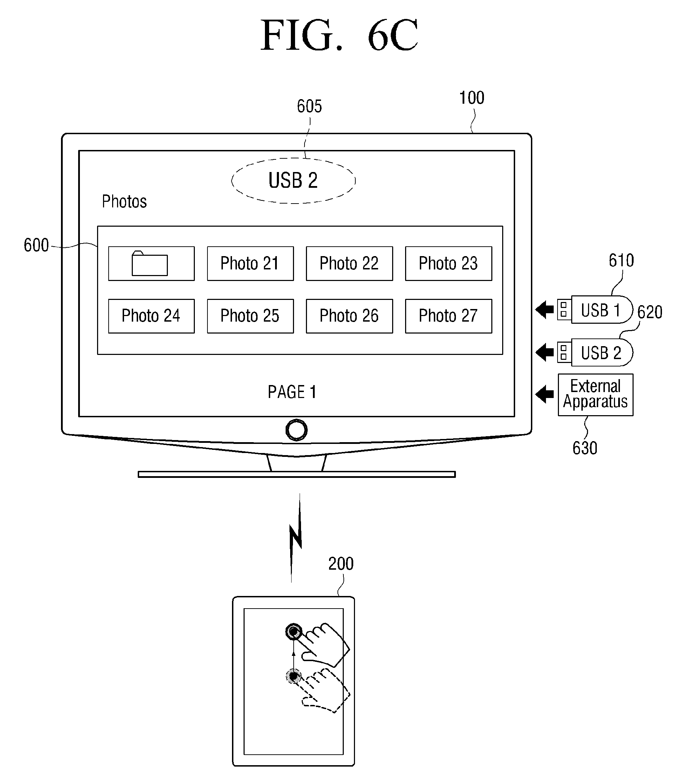

Accordingly, if the upward flick touch manipulation is input to the touch screen as shown in FIG. 6B, a content list relating to the second USB memory 620 is displayed on the content list display area 600 as shown in FIG. 6C as shown in FIG. 6C. Also, as shown in FIG. 6C, 'USB 2' is displayed in the storage medium display area 605, representing that the storage medium to which the current content list belongs is the second USB memory 620.

In this state, if still another upward flick touch manipulation is input to the touch screen of the remote controller 200 as shown in FIG. 6C, the TV 100 changes the storage medium to which the current content list belongs from the second USB memory 620 to the external apparatus 630. The external apparatus 630 refers to a memory included in an external apparatus. Also, the external apparatus 630 is the next storage medium of the second USB memory 620.

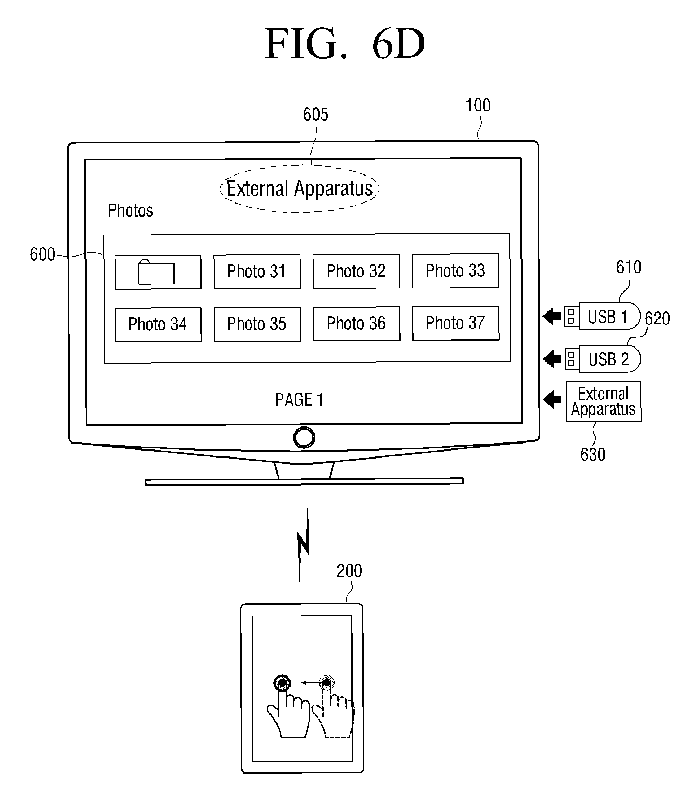

Accordingly, if the upward flick touch manipulation is input to the touch screen of the remote controller 200 as shown in FIG. 6C, a content list relating to the external apparatus 630 is displayed on the content list display area 600 as shown in FIG. 6D. Also, as shown in FIG. 6D, 'external apparatus" is displayed on the storage medium display area 605, representing that the storage medium to which the current content list belongs is the memory of the external apparatus 630.

In this state, if a leftward flick touch manipulation is input to the touch screen of the remote controller 200 as shown in FIG. 6D, the TV 100 changes the page of the current content list to a next page as shown in FIG. 6E. In FIG. 6D, the page of the content list is 'PAGE 1', but the page of the content list is 'PAGE 2' in FIG. 6E.

In the state of FIG. 6E, if a rightward flick touch manipulation is input to the touch screen of the remote controller 200, the TV 100 displays the 'PAGE 1' of the content list again as shown in FIG. 6D.

As described above, under the condition where a type of content such as photo contents, movie contents, and music contents to be displayed has been selected and a content list relating to the selected type of content is being displayed, if the vertical flick touch manipulation (upward flick or downward flick) is sensed, the TV 100 changes the storage medium-based category of the content list. Also, if the horizontal flick touch manipulation (leftward flick or rightward flick) is sensed, the TV 100 changes the page of the content list accordingly.

Accordingly, the user is able to change the storage medium to which the content list belongs simply by the flick touch manipulation.

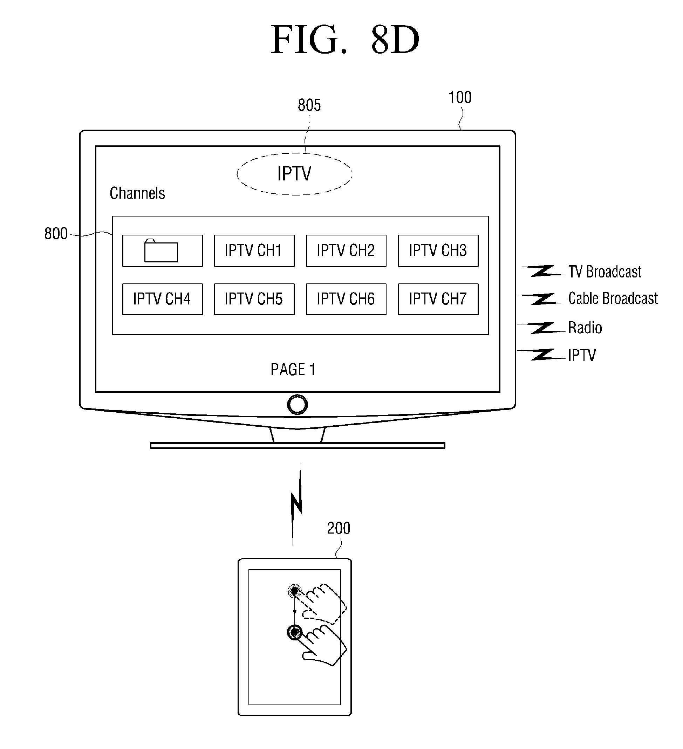

Hereinafter, the channel type-based category will be explained with reference to FIGS. 7 and 8D. FIG. 7 is a flowchart illustrating a process of changing a channel type by a flick touch manipulation according to an exemplary embodiment.

The TV 100 senses a flick touch manipulation (S710). If the sensed flick touch manipulation is an upward flick (S720-Y), the TV 100 changes a channel type to which a currently displayed content list belongs to a next channel type (S725). Also, the TV 100 displays a content list (channel list) relating to the next channel type (S740).

On the other hand, if the sensed flick touch manipulation is a downward flick (S730-Y), the TV 100 changes the channel type to which the current content list belongs to a previous channel type (S735). Then, the TV 100 displays a content list (channel list) relating to the previous channel type (S740).

If the sensed flick touch manipulation is a leftward flick (S750-Y), the TV 100 changes a page of the current content list (channel list) to a next page (S755). The TV 100 displays the next page of the content list (S770).

If the sensed flick touch manipulation is a rightward flick (S760-Y), the TV 100 changes the page of the current content list (channel list) to a previous page (S765). Then, the TV 100 displays the previous page of the content list (S770).

As described above, if the vertical flick touch manipulation (upward flick or downward flick) is sensed, the TV 100 changes the channel type based category of the content list.

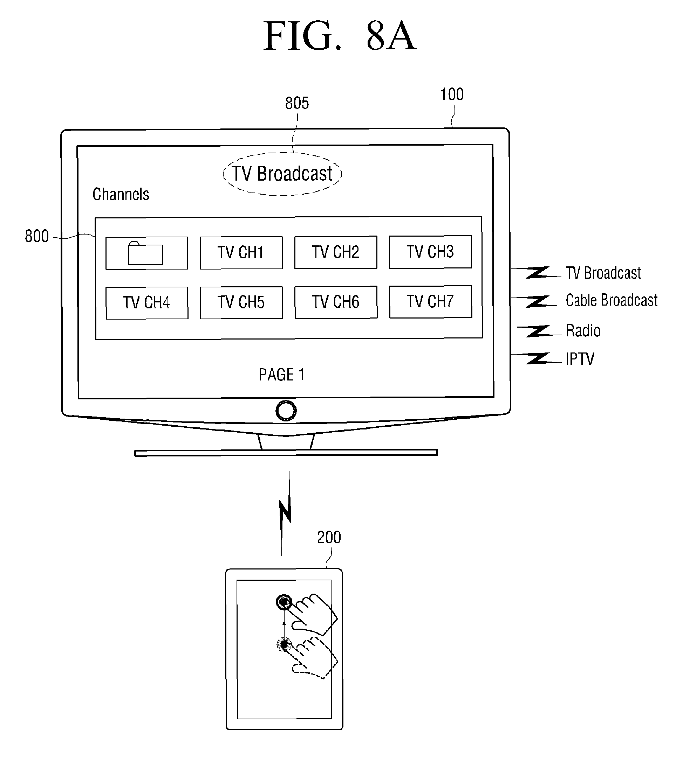

The example of the process of changing the channel type-based category will be explained with reference to FIGS. 8A to 8D. FIGS. 8A to 8D are views illustrating the process of changing the channel type by the flick touch manipulation according to an exemplary embodiment.

In FIGS. 8A to 8D, the channel type receivable by the TV 100 includes a TV broadcast channel, a cable broadcast channel, a radio channel, and an IPTV channel. The channel type is changed in order of the TV broadcast channel, the cable broadcast channel, the radio channel, and the IPTV channel. As shown in FIGS. 8A to 8D, a content list display screen includes a content list display area 800 and a channel type display area 805. In FIGS. 8A to 8D, the content list is a channel list.

FIG. 8A illustrates the TV 100 which displays a channel list of channels receivable through a TV broadcast channel. As shown in FIG. 8A, 'TV broadcast' is displayed on the channel type display area 805. In other words, the channel list displayed on the content list display area 800 is a channel list relating to a TV broadcast channel. Also, referring to a lower portion of the screen, the first page of the channel list is currently displayed on the screen.

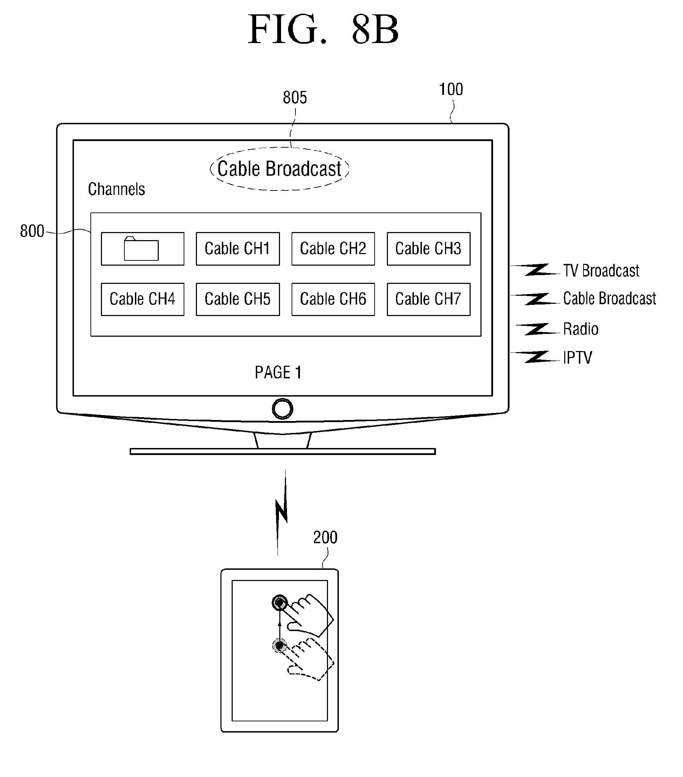

In this state, if an upward flick touch manipulation is input to the touch screen of the remote controller 200 as shown in FIG. 8A, the TV 100 changes the channel type to which the current content list belongs from the TV broadcast channel to the cable broadcast channel, as shown in FIG. 8B. The cable broadcast channel is a next channel type of the TV broadcast channel.

Accordingly, if the upward flick touch manipulation is input to the touch screen of the remote controller 200 as shown in FIG. 8A, a channel list relating to the cable broadcast channel is displayed on the content list display area 800 as shown in FIG. 8B. Also, as shown in FIG. 8B, 'Cable Broadcast' is displayed on the channel type display area 805, representing that the channel type to which the current content list belongs is the cable broadcast channel.

In this state, if another upward flick touch manipulation is input to the touch screen of the remote controller 200 as shown in FIG. 8B, the TV 100 changes the channel type to which the current content list belongs from the cable broadcast channel to the radio channel. The radio channel is a next channel type of the cable broadcast channel.

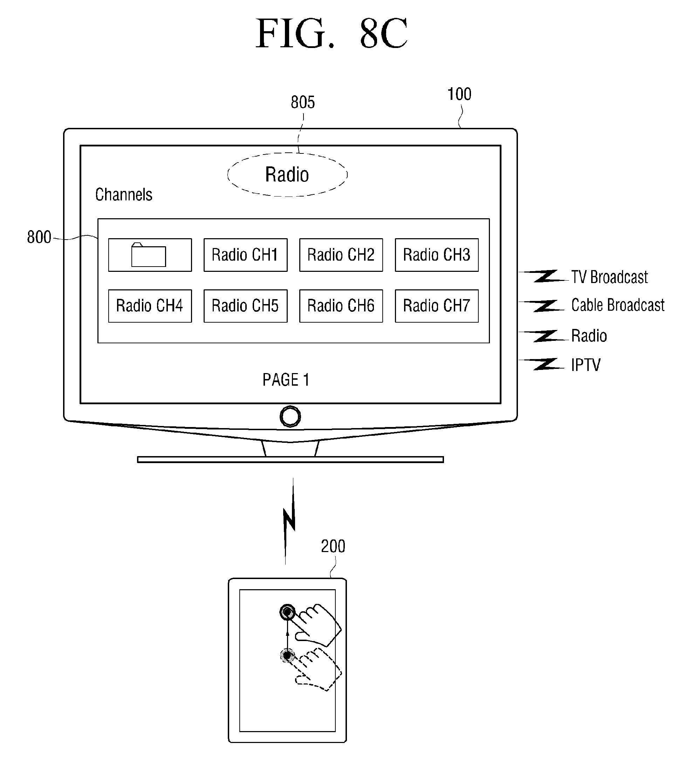

Accordingly, if the upward flick touch manipulation is input to the touch screen of the remote controller 200 as shown in FIG. 8B, a channel list relating to the radio channel is displayed on the content list display area 800 as shown in FIG. 8C. Also, as shown in FIG. 8C, 'Radio' is displayed on the channel type display area 805, representing that the channel type to which the current content list belongs is the radio channel.

In this state, if still another upward flick touch manipulation is input to the touch screen of the remote controller 200 as shown in FIG. 8C, the TV 100 changes the channel type to which the current content list belongs from the radio channel to the IPTV channel. The IPTV channel is a next channel of the radio channel.

Accordingly, if the upward flick touch manipulation is input to the touch screen of the remote controller 200 as shown in FIG. 8C, a channel list relating to the IPTV channel is displayed on the content list display area 800, as shown in FIG. 8B. Also, as shown in FIG. 8D, 'IPTV' is displayed on the channel type display area 805, representing that the channel type to which the current content list belong is the IPTV channel.

In the state of FIG. 8D, if a downward flick touch manipulation is input to the touch screen of the remote controller 200, the TV 100 displays the channel list relating to the radio channel again as shown in FIG. 8C.

As described above, if the vertical flick touch manipulation (upward flick or downward flick) is sensed, the TV 100 changes the channel type-based category of the content list. Therefore, the user is able to change the channel type to which the current content list belongs simply by the flick touch manipulation.

Hereinafter, the content type-based category will be explained with reference to FIGS. 9 to 10C. FIG. 9 is a flowchart illustrating a process of changing a type of content by a flick touch manipulation according to an exemplary embodiment.

The TV 100 senses a flick touch manipulation (S910). If the sensed flick touch manipulation is an upward flick (S920-Y), the TV 100 changes a type of content to which a currently displayed content list belongs to a next type (S925). Then, the TV 100 displays a content list relating to the next type of content (S940).

On the other hand, if the sensed flick touch manipulation is a downward flick (S930-Y), the TV 100 changes the type of content to which the current content list belongs to a previous type (S935). Then, the TV 100 displays a content list relating to the previous type of content (S940).

If the sensed flick touch manipulation is a leftward flick (S950-Y), the TV 100 changes a page of the current content list to a next page (S955). Then, the TV 100 displays the next page of the content list (S970).

If the sensed flick touch manipulation is a rightward flick (S960-Y), the TV 100 changes the page of the current content list to a previous page (S965). Then, the TV 100 displays the previous page of the content list (S970).

As described above, if the vertical flick touch manipulation (upward flick or downward flick) is sensed, the TV 100 changes the content type-based category of the content list.

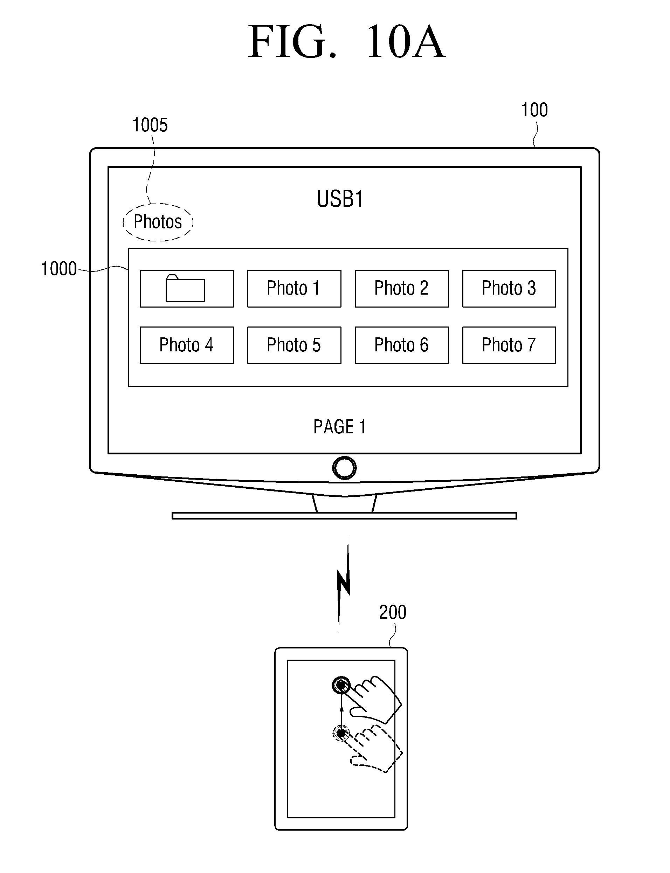

The example of the process of changing the content type-based category will be explained in detail with reference to FIGS. 10A to 10C. FIGS. 10A to 10C are views illustrating the process of changing the type of content by the flick touch manipulation according to an exemplary embodiment. FIGS. 10A to 10C illustrate a USB1 as a storage medium of the content list.

In FIGS. 10A to 10C, the type of content includes photo contents, movie contents, and music contents. Also, the type of content may be changed in order of the photo contents, the movie contents, and the music contents. Also, as shown in FIGS. 10A to 10C, a content list display screen includes a content list display area 1000 and a content type display area 1005.

FIG. 10A illustrates the TV 100 on which a content list relating to the photo contents is displayed. As shown in FIG. 10A, 'Photos' is displayed on the content type display area 1005. In other words, the content list displayed on the content list display area 1000 is a list relating to photos stored in the USB memory. Also, referring to a lower portion of the screen, the first page of the content list is displayed on the screen.

In this state, if an upward flick touch manipulation is input to the touch screen of the remote controller 200 as shown in FIG. 10A, the TV 100 changes a type of content to which a currently displayed content list belongs from the photo contents to the movie contents. The movie contents are a next type of content of the photo contents.

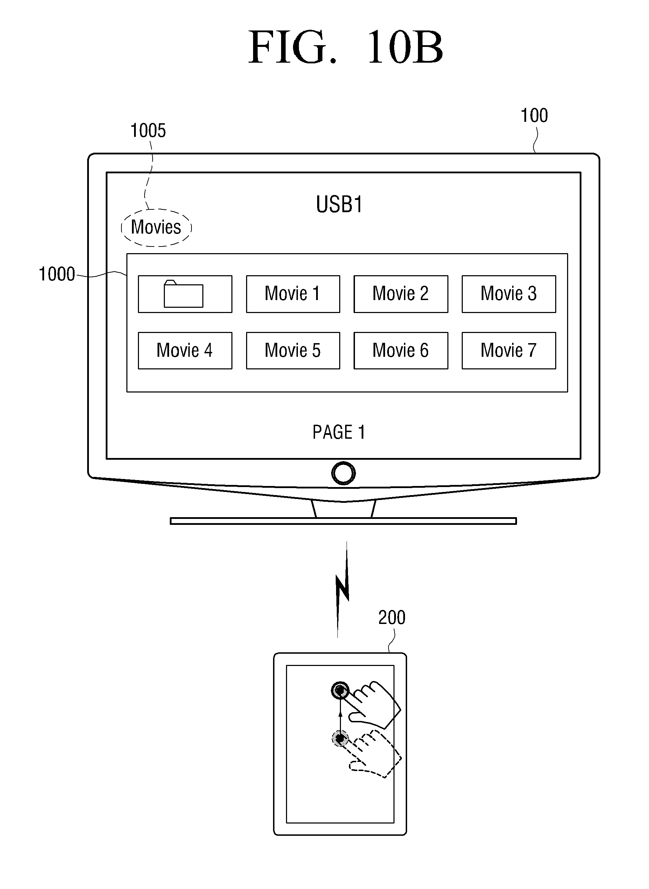

Accordingly, if the upward flick touch manipulation is input to the touch screen of the remote controller 200 as shown in FIG. 10A, a content list relating to the movie contents is displayed on the content list display area 1000. Also, 'Movies' is displayed on the content type display area 1005, representing that the type of content to which the current content list belongs is the movie contents, as shown in FIG. 10B.

In this state, if another upward flick touch manipulation is input to the touch screen of the remote controller 200 as shown in FIG. 10B, the TV 100 changes the type of content to which the current content list belongs from the movie contents to the music contents. The music contents are a next type of content of the movie content.

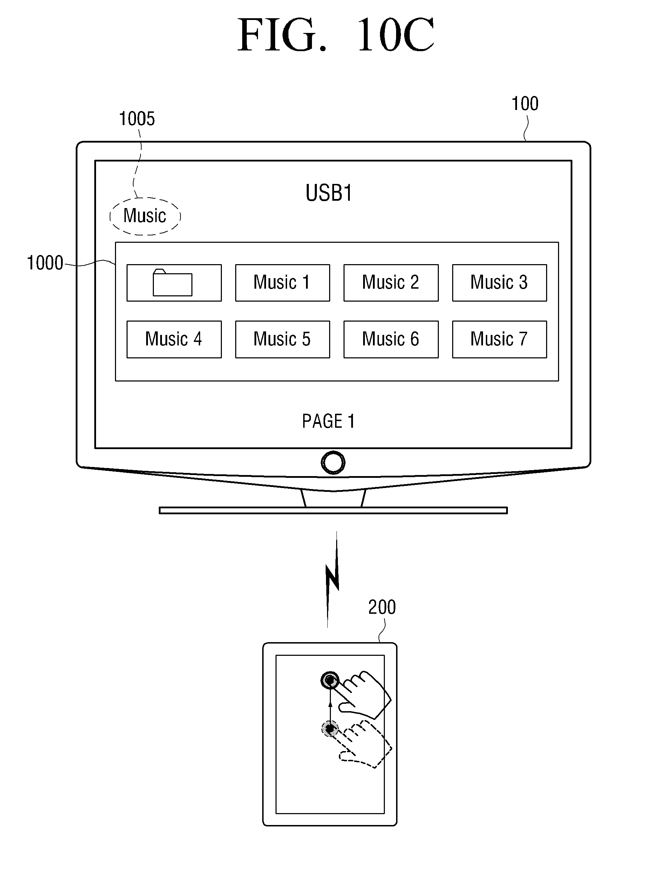

Accordingly, if the upward flick touch manipulation is input to the touch screen of the remote controller 200 as shown in FIG. 10B, a content list relating to the music contents is displayed on the content list display area 1000 as shown in FIG. 10C. Also, 'Music' is displayed on the content type display area 1005, representing that the type of content to which the current content list belong is the music contents, as shown in FIG. 10C.

As described above, under the condition that the storage medium of the content list such as a USB1, a USB2, and a built-in memory has been selected and the content list relating to the selected storage medium is displayed, if the vertical flick touch manipulation (upward flick or downward flick) is sensed, the TV 100 changes the content type-based category of the content list accordingly. Accordingly, the user is able to change the type of content to which the content list belongs simply by the flick touch manipulation.

Although only the upward flick or rightward flick has been described in FIGS. 6A to 6E, FIGS. 8A to 8D, and FIGS. 10A to 10C, downward flick or leftward flick may be applied. In other words, the downward flick performs an opposite function of the upward flick and the leftward flick performs an opposite function of the rightward flick.

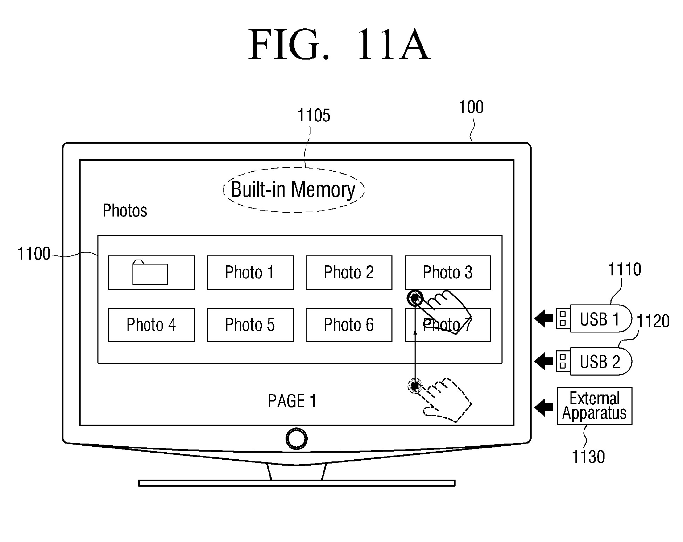

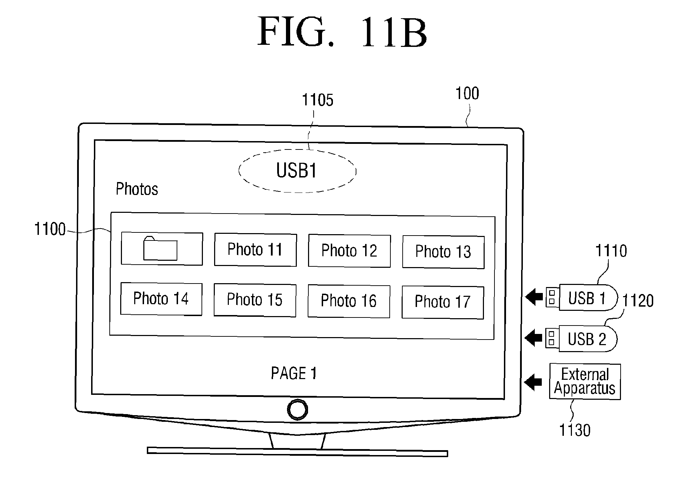

In the above exemplary embodiment, the remote controller 200 senses the touch manipulation. However, this is merely an example. The TV 100 may sense the touch manipulation. This will be explained in detail with reference to FIGS. 11A and 11B. FIGS. 11A and 11B are views illustrating direct input of a touch manipulation into a screen of a TV.

In FIGS. 11A and 11B, the TV 100 includes a built-in memory and is connected to a first USB memory 1110, a second USB memory 1120, and an external apparatus 1130. Also, these storage media are changed in order of the built-in memory, the first USB memory 1110, the second USB memory 1120, and the external apparatus 1130. Also, as shown in FIGS. 11A and 11B, a content list display screen includes a content list display area 1100 and a storage medium display area 1105.

In FIGS. 11A and 11B, the screen of the TV 100 serves as a touch screen. Therefore, the user is able to input a touch manipulation by touching the screen of the TV 100.

FIG. 11A illustrates the TV 100 which displays a content list relating to contents stored in the built-in memory on the screen. As shown in FIG. 11A, 'Built-in Memory' is displayed on the storage medium display area 1105. In other words, the content list displayed on the content list display area 1100 is a list relating to photos stored in the built-in memory of the TV. Also, referring to a lower portion of the screen, the first page of the content list is displayed.

In this state, if an upward flick touch manipulation is input to the touch screen of the TV 100 as shown in FIG. 11A, the TV 100 changes the storage medium to which the current content list belongs from the built-in memory to the first USB memory 1110. The first USB memory 1110 is another storage medium in addition to the built-in memory.

Accordingly, if the upward flick touch manipulation is input to the touch screen of the TV 100 as shown in FIG. 11A, a content list relating to the first USB memory 1110 is displayed on the content list display area 1100 as shown in FIG. 11B. Also, as shown in FIG. 11B, 'USB 1' is displayed on the storage medium display area 1105, representing that the storage medium to which the current content list belong is the first USB memory 1110.

As described above, the TV 100 is capable of sensing the direct flick manipulation.

In the above exemplary embodiment, the TV 100 changes the category of the content list if the vertical flick touch manipulation (upward and downward flick) is sensed. However, the category of the content list may be changed by a flick manipulation of another axis-direction. For example, the category of the content list may be set to be changed by a vertical flick manipulation (leftward or downward flick).

In the above exemplary embodiment, the TV 100 has been explained as a display apparatus. However, any display apparatus can be applied that can replay contents and display a content list. For example, the display apparatus may be a mobile phone, a portable multimedia player (PMP), and an MP3 player.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing a user interface , the method comprising:
displaying a content list relating to a plurality of contents on a display apparatus;
sensing a touch manipulation while the content list relating to the plurality of contents is displayed;
changing a category of the content list which is displayed if the touch manipulation is a flick touch manipulation of a first axis direction; and
updating the content list which is displayed on one page within a current category and displaying the updated content list if the touch manipulation is a flick touch manipulation of a second axis direction is sensed..

2. The method as claimed in claim 1, wherein the changing the category comprises, if the flick touch manipulation of the first axis direction is sensed in a state that a type of content of the content list is selected and a content list relating to the selected type of content is displayed, changing a storage medium-based category of the content list which is displayed.

3. The method as claimed in claim 1 or 2, wherein the changing the category comprises, if the flick touch manipulation of the first axis direction is sensed in a state that a storage medium of the content list is selected and a content list relating to the selected storage medium is displayed, changing a content type-based category of the content list which is displayed.

4. The method as claimed in anyone of claims 1 to 3, wherein the changing the category comprises, if the flick touch manipulation of the first axis direction is sensed, changing a storage medium to which a displayed content list belongs to another storage medium, and displaying a content list relating to contents stored in the other storage medium.

5. The method as claimed in claim 4, wherein the storage medium includes at least one of a storage medium embedded in the display apparatus, an external storage medium connected to the display apparatus, and a storage medium embedded in an external apparatus connected to the display apparatus.

6. The method as claimed in anyone of claims 1 to 5, wherein the changing the category comprises, if the flick touch manipulation of the first axis direction is sensed, changing a channel type to which a displayed content list belongs to another channel type, and displaying a content list relating to contents received through the other channel type.

7. The method as claimed in claim 6, wherein the channel type includes at least one of a terrestrial television (TV) channel, a cable TV channel, a radio channel, a data broadcast channel, and an Internet protocol television (IPTV) channel.

8. The method as claimed in anyone of claims 1 to 7, wherein the changing the category comprises, if the flick touch manipulation of the first axis direction is sensed, changing a type of content to which a displayed content list belongs to another type of content and displaying a content list relating to the other type of content.

9. The method as claimed in claim 8, wherein the type of content includes at least one of moving picture contents, photo contents, music contents, and document contents.

10. The method as claimed in anyone of claims 1 to 9, wherein the sensing the touch manipulation comprises:
sensing the touch manipulation by a remote controller operating with respect to the display apparatus; and
transmitting information regarding the sensed touch manipulation to the display apparatus by the remote controller.

11. A display apparatus comprising:
a display unit which displays a content list relating to a plurality of contents; and
a controller which changes a category of the content list which is displayed if a flick touch manipulation of a first axis direction is sensed, , and updates the content list which is displayed on one page within a current category if a flick touch manipulation of a second axis-direction is sensed.

12. The display apparatus as claimed in claim 11, wherein, if the flick touch manipulation of the first axis direction is sensed in a state that a type of content of the content list is selected and a content list relating to the selected type of content is displayed, the controller changes a storage medium-based category of the displayed content list.

13. The display apparatus as claimed in claim 11 or 12, wherein, if the flick touch manipulation of the first axis direction is sensed in a state that a storage medium of the content list is selected and a content list relating to the selected storage medium is displayed, the controller changes a content type-based category of the content list which is displayed.

14. The display apparatus as claimed in anyone of claims 11 to 13, wherein, if the flick touch manipulation of the first axis direction is sensed, the controller changes a storage medium to which a displayed content list belongs to another storage medium and displays a content list relating to contents stored in the other storage medium.

15. The display apparatus as claimed in claim 14, wherein the storage medium includes at least one of a storage medium embedded in the display apparatus, an external storage medium connected to the display apparatus, and a storage medium embedded in an external apparatus connected to the display apparatus.
